# EUROPÄISCHE PATENTANMELDUNG

(11) **EP 1 174 036 A1**
(43) Veröffentlichungstag der Anmeldung: **23.01.2002**
(21) Anmeldenummer: 01116686.5
(22) Anmeldetag: 17.07.2001
(51) Int. Cl.: A22C 13/00

(54) **Nach dem Aminoxidverfahren hergestellte Nahrungsmittelhüllen auf Cellulosebasis**

(30) Priorität: 22.07.2000 DE 10035799
(71) Anmelder: Kalle GmbH & Co. KG, 65203 Wiesbaden (DE)
(72) Erfinder: Gord, Herbert, Dipl.-Ing., 55218 Ingelheim (DE); Hammer, Klaus-Dieter, Dr., 55120 Mainz (DE); Neeff, Rainer, Dr., 65203 Wiesbaden (DE); Berghof, Klaus, Dipl.-Chemiker, 07407 Rudolstadt-Schwarza (DE); Eilers, Markus, Dipl.-Ing., 07407 Rudolstadt-Schwarza (DE); Maron, Reinhard, Dr., 07407 Rudolstadt-Schwarza (DE)
(74) Vertreter: Plate, Jürgen, Dr.

(57) **Zusammenfassung**

Die Erfindung betrifft eine Nahrungsmittelhülle auf Cellulosebasis, hergestellt mit einer Spinnlösung, die Cellulose, N-Methyl-morpholin-N-oxid, Wasser, mindestens ein Additiv, das die Oberflächeneigenschaften der Hülle verändert, und mindestens einem anderen Additiv, das ihre innere Struktur verändert, umfaßt. Das oberflächenverändernde Additiv ist bevorzugt ein Protein, ein Proteinderivat, ein Mono-, Di- und Triglycerid, ein Diketen mit langkettigen Alkylresten, ein Wachs oder ein Paraffin. Die Spinnlösung enthält daneben mindestens ein weiteres Additiv, das die innere Struktur der Cellulosehülle verändert. Gegebenenfalls kann die Hülle auch eine Vlieseinlage enthalten. Die Hülle ist bevorzugt schlauchförmig. Sie ist besonders als Wursthülle geeignet, wobei sich die nicht mit einer Einlage verstärkte Hülle besonders als Schäldarm bei der Herstellung von Würstchen eignet, während die faserverstärkte besonders für Rohwurst geeignet ist.

## Beschreibung

Die Erfindung betrifft eine Nahrungsmittelhülle auf Cellulosebasis, hergestellt mit einer Lösung, die Cellulose, N-Methyl-morpholin-N-oxid (NMMO), Wasser und Additive umfaßt. Bevorzugt handelt es sich um eine nahtlose, schlauchförmige Hülle. Diese eignet sich besonders als Wursthülle.

Cellulose ist in üblichen Lösemitteln unlöslich. Sie hat keinen Schmelzpunkt oder -bereich, sondern zersetzt sich beim Erhitzen und kann daher auch nicht thermoplastisch verarbeitet werden. Deshalb wird normalerweise zur Herstellung von Nahrungsmittelhüllen die Cellulose chemisch umgewandelt. Diese Verfahren sind jedoch mit einem Abbau der Cellulose verbunden, d.h. der durchschnittliche Polymerisationsgrad DP der Cellulose wird geringer, was zu einer entsprechend verminderten mechanischen Festigkeit der daraus hergestellten Hüllen führt.

Gegenwärtig ist das Viskoseverfahren besonders verbreitet. Darin wird die Cellulose mit Natronlauge und anschließend mit Schwefelkohlenstoff umgesetzt. Auf diese Weise wird eine gelb-orangefarbene Cellulosexanthogenat-Lösung (= Viskose) erhalten, die dann durch eine Spinndüse extrudiert wird. Nach diesem Verfahren lassen sich auch faserverstärkte Hüllen herstellen. Dazu wird üblicherweise ein Fasermaterial - besonders bevorzugt ist Hanffaserpapier - zunächst zu einem Schlauch geformt, der anschließend innen, außen oder auf beiden Seiten mit Viskose beaufschlagt wird (auch bezeichnet als Innen-, Außen- bzw. Doppelviskosierung). Mit Hilfe von Fäll- und Waschbädern wird das Cellulosexanthogenat dann zu Cellulose regeneriert. Das Viskoseverfahren erfordert jedoch technisch aufwendige und entsprechend kostspielige Vorrichtungen zur Reinigung von Abluft und Abwasser.

Bekannt ist schließlich auch noch das (inzwischen veraltete) Kupferoxidammoniakverfahren, bei dem die Cellulose durch Cu(NH₃)ₘ(OH)₂ komplexiert und damit löslich gemacht wird. Auch dieses Verfahren ist technisch aufwendig und umweltbelastend.

Bereits im Jahre 1936 wurde entdeckt, daß Cellulose in Oxiden tertiärer Amine löslich ist (DE 713 486); aber erst mehr als 30 Jahre später wurde diese Entdeckung weiterverfolgt. Dabei wurde NMMO als das am besten geeignete tertiäre Aminoxid identifiziert. Die Cellulose löst sich darin, ohne sich chemisch zu verändern. Es findet kein Abbau der Celluloseketten statt. Auch die Herstellung der entsprechenden Spinnlösungen ist bekannt (DD 218 104; DD 298 789; US-A 4 145 532; US-A 4 196 282; US-A 4 255 300). Aus den Lösungen lassen sich durch Extrudieren in ein Spinnbad Fäden herstellen (DE-A 44 09 609; EP-A 574 870 ≈US-A 5 417 909). In der WO 95/07811 (= CA 2 149 218) ist auch ein Verfahren zur Herstellung von Cellulose-Schlauchfolien nach dem Aminoxidverfahren offenbart. Kennzeichnend an diesem Verfahren ist die Kühlung der extrudierten Folie mit Kühlgas unmittelbar unterhalb des Ringspalts der Extrusionsdüse. Rückgewinnung und Reinigung des NMMO's sind in der DD 274 435 beschrieben.

Da die Cellulose in dem NMMO-Verfahren chemisch nicht umgewandelt wird, ist der apparative Aufwand geringer als beim Viskose-Verfahren. Der besondere Vorteil des Aminoxidverfahrens besteht darin, daß praktisch keine gasförmigen oder wäßrigen Abfallprodukte mehr anfallen und Abluft oder Abwasser daher nicht mehr aufwendig behandelt werden müssen. Es erlangt daher eine zunehmende Bedeutung.

In der EP-A 0 686 712 wird die Herstellung von Cellulosefasern nach dem NMMO-Spinnverfahren beschrieben. Darin wird eine Celluloselösung in wasserhaltigem NMMO durch eine Spinndüse ausgepreßt, über eine Luftstrecke in ein NMMO-haltiges, wäßriges Fällbad geführt, anschließend gewaschen, nachbehandelt und getrocknet. Spinnlösung und Fällbad enthalten niedermolekulare, organische Additive mit stickstoffhaltigen Gruppen. Die Additive sind bevorzugt Amine, Amide oder andere Aminogruppen enthaltende Substanzen.

In der WO 95/35340 ist ein Verfahren zur Herstellung von Celluloseblasfolien beschrieben, in dem eine in NMMO gelöste, nicht derivatisierte Cellulose verwendet wird.

Das Aminoxidverfahren hat jedoch auch Nachteile. Die nicht-derivatisierten Cellulosemoleküle sind in der NMMO-Lösung bereits vororientiert und wesentlich dichter gepackt als bei chemisch veränderten ("derivatisierten") Molekülen. Beim Extrudieren wird die Orientierung in Längsrichtung noch stärker. Die so erzeugten Fäden zeigen daher eine hohe Festigkeit in Längsrichtung, jedoch nur eine geringe in Querrichtung. Sie neigen stark zum Spleißen bei mechanischer Beanspruchung im nassen Zustand. Folien oder andere Formkörper, die in Längs- und Querrichtung belastbar sein müssen, lassen sich so kaum herstellen. Aufgrund der kompakten Anordnung der Celluloseketten müssen zur Herstellung der Hüllen sekundäre Weichmacher, wie Glycerin oder andere Polyole, eingesetzt werden. Aber auch damit wird keine optimale Geschmeidigkeit erreicht. Zudem benötigen die nach dem Aminoxidverfahren hergestellten Cellulosehüllen praktisch immer eine zusätzliche Innenimprägnierung, die für das richtige Maß an Haftung zwischen Hülle und Füllgut sorgt. Die Art der Innenimprägnierung richtet sich dabei auch nach dem Füllgut.

In der WO 97/31970 sind Nahrungsmittelhüllen auf der Basis von Cellulosehydrat beschrieben, die mit in NMMO-Monohydrat gelöster Cellulose hergestellt sind. Die Spinnlösung enthält vorzugsweise Additive, die die Hülle geschmeidiger machen. Als besonders geeignete modifizierende Verbindungen sind Stärke, Stärke- und Cellulosederivate, Zuckerester, Alginsäure, Alginate, Chitosan, Carrageenan, Polyvinylalkohol, Polyvinylacetat, Polyacrylat, Polyvinylpyrrolidon, ethoxylierte Fettsäuren und deren Salze, Wachse und Paraffine offenbart.

Es bestand daher die Aufgabe, nach dem Aminoxidverfahren hergestellte Hüllen zur Verfügung zu stellen, die die oben beschriebenen Nachteile nicht mehr zeigen. Vor allem sollen die Oberflächeneigenschaften der Wursthülle in der Weise verbessert sein, daß sie in ausreichendem Maß während Herstellung und Lagerung der Wurst an der Brätoberfläche haftet und sich dennoch leicht abschälen läßt. Die Schälbarkeit soll so gut sein, daß eine zusätzliche Innenpräparation nur noch bei wenigen, ganz speziellen Anwendungen (wie Blutwurst) erforderlich ist. Sie soll kostengünstig und umweltverträglich herstellbar sein. Sie soll zudem für den Einsatz als Wursthülle ausreichend geschmeidig und zäh sein.

Lösen läßt sich die Aufgabe, wenn der bekannten Cellulose/NMMO-Hydrat-Lösung Additive hinzugefügt werden, die zu einer Veränderung der Oberfläche der damit hergestellten Hülle führen, und darüber hinaus andere Zusätze, die eine Veränderung der inneren Struktur der Hülle bewirken. Besonders die letztgenannten Zusätze lassen die Hülle in der Regel zäher und geschmeidiger werden. Sie erhöhen ferner die Clip- und Scherstabilität.

Gegenstand der vorliegenden Erfindung ist somit eine Nahrungsmittelhülle auf Cellulosebasis, hergestellt mit einer Lösung, die Cellulose, N-Methyl-morpholin-N-oxid, Wasser und Additive umfaßt, wobei die Hülle dadurch gekennzeichnet ist, daß die Lösung mindestens ein Additiv enthält, das die Oberflächeneigenschaften der Hülle verändert, und mindestens ein anderes Additiv, das ihre innere Struktur verändert. Zu den Oberflächeneigenschaften zählt dabei nicht nur die Oberflächentopographie, sondern auch Parameter wie Oberflächenspannung und Affinität zum Füllgut, insbesondere zum Wurstbrät.

Die Hülle ist bevorzugt schlauchförmig, kann jedoch auch bahnförmig sein. Sie kann zusätzlich eine Faserverstärkung enthalten. Als Faserverstärkung wird eine Einlage aus einem bahnförmigen Fasermaterial, beispielsweise einem naßfesten Hanffaserpapier, bezeichnet. Dabei hat das Fasermaterial allgemein ein Gewicht von 15 bis 28 g/m². Das Fasermaterial wird allgemein zu einem Schlauch geformt, der dann innen, außen oder innen und außen mit der genannten Cellulose/ NMMO-Hydrat/Additiv-Lösung beaufschlagt wird. Fasern, die in der Cellulose/ NMMO-Hydratlösung vor der Extrusion praktisch homogen verteilt werden, sollen hier nicht unter den Begriff "Faserverstärkung" verstanden werden. Hüllen mit einer solchen Verstärkung sind zudem problematisch in der Herstellung. Insbesondere wird durch die Fasern sehr häufig der Düsenspalt verstopft.

Die oberflächenverändernden Additive sind allgemein organische Polymere. Es können in der Natur vorkommende Polymere, Derivate von solchen natürlichen Polymeren oder synthetische Polymere sein. Besonders geeignet sind Proteine (wie Gelatine, Casein, Weizenprotein, Sojaprotein), Proteinderivate (beispielsweise eine durch Umsetzung mit Stearoylchlorid derivatisierte Gelatine oder Natrium- oder Kaliumcaseinat), Derivate von Mono-, Di- oder Oligosacchariden, insbesondere Ester aus Zucker und Fettsäuren (wie Ester aus Saccharose und geradkettigen, gesättigten oder ungesättigten (C₁₂ - C₂₄)Fettsäuren), Mono-, Di- und Triglyceride (wie Glycerin-monolaurat, das zusätzlich auch noch fungicide Eigenschaften hat), Diketene mit allgemein geradkettigen, gesättigten (C₁₄-C₂₀)-Alkylresten (erhältlich beispielsweise unter der Bezeichnung ®Aquapel), Wachse (wie Bienenwachs, Montanwachs oder Carnaubawachs) und/oder Paraffine. Es können auch mehrere der genannten Additive gleichzeitig eingesetzt werden. Proteine und Polyamide bewirken insbesondere eine Verbesserung der Bräthaftung.

Der Anteil der oberflächenmodifizierenden Additive beträgt, je nach ihrer Wirksamkeit und den angestrebten Oberflächeneigenschaften der Hülle, allgemein 0,2 bis 50,0 Gew.-%, bevorzugt 0,3 bis 15,0 Gew.-%, jeweils bezogen auf das Gewicht der Cellulose.

Zusätzlich zu dem mindestens einen oberflächenmodifizierenden Additiv enthält die Spinnlösung noch mindestens ein weiteres, mit diesem nicht identisches Additiv, das die innere Struktur der Cellulosehülle verändert. Geeignete strukturverändernde Additive sind in der DE-A 196 07 953 offenbart. Zur Veränderung der inneren Struktur besonders geeignet sind Stärke, Stärkederivate (insbesondere Stärkeester oder -ether), Cellulose, Cellulosederivate (insbesondere Celluloseether, wie Methoxy-, oder Ethoxycellulose oder Carboxymethylcellulose), Polysaccharide (wie Xanthangummi [Polysaccharid aus dem Bakterium *Xanthomonas campestris*], Carrageenan oder Johannisbrotkernmehl), Alginsäure, Alginate, Chitosan, Polyvinylalkohol, Polyvinylacetate, Polyacrylate, Polyvinylpyrrolidon, Copolymere mit Einheiten aus Vinylpyrrolidon, Methylvinylether/Maleinsäureanhydrid-Copolymere, aliphatische oder aromatische Polyamide (erhältlich beispielsweise unter der Bezeichnung ®Grilltex 1465 oder ®Grilltex 1466 von der Ems Chemie) oder Polyester (insbesondere biologisch abbaubare Polyester, wie Polycaprolacton), Fettsäuren (wie Stearinsäure) oder Fettsäuresalze (wie Calciumstearat). Die strukturverändernden Additive sind mitbestimmend für die Geschmeidigkeit und Permeation der Hüllen. Außerdem bewirken sie eine erhöhte Rauchdurchlässigkeit.

Der Anteil dieser die innere Struktur beeinflussenden Additive beträgt allgemein 0,1 bis 50 Gew.-%, bevorzugt 0,5 bis 25 Gew.-%, besonders bevorzugt 1 bis 15 Gew.-%, jeweils bezogen auf das Gewicht der Cellulose. Diese Additive können, wie in der DE-A beschrieben, mit der Spinnlösung vermischt oder - wie die oberflächenverändernden Additive auch - bereits der Maische zugegeben werden. Die zusätzlichen Additive erlauben es in vielen Fällen sogar, die Spinngeschwindigkeit zu erhöhen.

Der Gesamtanteil an struktur- und oberflächenverändernden Additiven beträgt dabei allgemein nicht mehr als 60 Gew.-%, bevorzugt nicht mehr als 40 Gew.-%, jeweils bezogen auf das Gewicht der Cellulose. Durch geeignete Wahl von Art und Anteil der Additive läßt sich die Viskosität der Spinnlösung in weiten Bereichen variieren.

Die Spinnlösung enthält bevorzugt 5 bis 15 Gew.-%, besonders bevorzugt 6 bis 12 Gew.-%, speziell 7 bis 10 Gew.-%, Cellulose, jeweils bezogen auf ihr Gesamtgewicht. Der durchschnittliche Polymerisationsgrad DP der Cellulose beträgt dabei bevorzugt 300 bis 700, besonders bevorzugt 400 bis 650. Als Lösemittel enthält die Spinnlösung bevorzugt 90,5 bis 92,5 Gew.-% NMMO und 9,5 bis 7,5 Gew.-% Wasser. Diese Parameter, zusammen mit der Temperatur, bestimmen im wesentlichen die Viskosität und das Fließverhalten der Spinnlösung.

Verfahren zur Herstellung der Spinnlösung sind dem Fachmann allgemein geläufig. Üblicherweise wird in diesen Verfahren Zellstoff in einer etwa 60 gew.-%igen wäßrigen NMMO-Lösung bei Raumtemperatur angemaischt. Der Zellstoff stammt gewöhnlich aus Holz oder Baumwolle. Bei steigender Temperatur wird dann in einem beheizten Rührbehälter unter Vakuum so lange Wasser abdestilliert, bis der Rückstand praktisch nur noch aus Zellstoff und NMMO-Monohydrat besteht. Das ist der Fall bei einem NMMO-Anteil von 87,7 Gew.-%, bezogen auf das Gesamtgewicht von NMMO und Wasser. Das Verhältnis NMMO zu Wasser läßt sich problemlos durch den Brechungsindex bestimmen. In dem NMMO-Monohydrat löst sich der Zellstoff bei einer Temperatur von 85 bis 105 °C und intensivem Rühren vollständig auf. Die dabei entstehende Lösung wird dann allgemein noch mehrere Stunden bei vermindertem Druck weiter gerührt, wobei sich der Wassergehalt des Lösemittels weiter auf etwa 7,5 bis 9,5 Gew.-% vermindert. Der Brechungsindex der Lösung liegt dann bei 1,4910 bis 1,4930. Die Spinnlösung wird anschließend entgast, filtriert und in den Spinnbehälter überführt. Das Vermischen mit den Additiven kann zu einem beliebigen Zeitpunkt vor der Extrusion erfolgen. Als besonders einfach und zweckmäßig hat es sich erwiesen, die Additive bereits der Maische zuzugeben.

Die Additive sind in der Spinnlösung praktisch homogen verteilt, bevor diese extrudiert wird. Die Extrusion erfolgt vorzugsweise bei einer Temperatur von 85 bis 105 °C, besonders bevorzugt 90 bis 95 °C. Bei der Herstellung von schlauchförmigen Hüllen ohne Faserpapiereinlage werden allgemein Ringdüsen eingesetzt mit einem Durchmesser von 14 bis 1.200 mm, bevorzugt 18 bis 1.000 mm, und einer Weite des Ringspalts von 0,1 bis 2,0 mm, bevorzugt von 0,2 bis 1,0 mm. Die Spaltweite ist allgemein an den Verzug angepaßt. Als "Verzug" wird dabei der Quotient aus der Geschwindigkeit beim Verlassen des Ringspalts (Ausströmgeschwindigkeit) und der Geschwindigkeit, mit der der extrudierte Schlauch abgezogen wird (Abzugsgeschwindigkeit) bezeichnet. Der Verzug liegt im allgemeinen bei 0,2 bis 2,4, bevorzugt bei 0,4 bis 2,0, besonders bevorzugt bei 0,8 bis 1,7. Die Ausströmgeschwindigkeit liegt je nach Konstruktion der Anlage bei 5 bis 120 m/min, bevorzugt bei 10 bis 80 m/min. Sie wird auch durch das Kaliber bestimmt. Auf den extrudierten Schlauch wird vorteilhaft nur ein geringer Zug in Längsrichtung ausgeübt, der im wesentlichen durch sein Eigengewicht zustande kommt. Allgemein wird nach unten, parallel zur Abzugsrichtung extrudiert.

In der "Luftstrecke", d.h. der Strecke zwischen Ringspalt und Oberfläche des Spinnbads, kann eine erste Querverstreckung der Hülle stattfinden. Die Luftstrecke beträgt bevorzugt 1 bis 50 cm, besonders bevorzugt 2,0 bis 30 cm. Sie hängt auch vom Durchmesser der Schlauchfolie nach der Verstreckung ab. Anders als in der obengenannten WO 95/07811 sind keine Maßnahmen für eine zusätzliche Kühlung in der Luftstrecke notwendig und dementsprechend auch nicht vorgesehen. Der extrudierte Schlauch kühlt sich in der Luftstrecke nur wenig ab. Die Querorientierung (anzustreben ist eine Hülle, in der die Celluloseketten in einem Winkel von durchschnittlich 45° zur Längsachse der Hülle orientiert sind) wird durch einen von innen wirkenden Gasdruck und/oder durch den hydrostatischen Druck des Innenbades bewirkt, wenn dessen Spiegel höher ist als der des umgebenden Außenbades. Unter Druck stehendes Gas, beispielsweise Druckluft, kann durch Öffnungen im Düsenkörper in das Innere des Schlauches gelangen. Durch die Verstreckung in Querrichtung erhöht sich die Querfestigkeit des Schlauches erheblich. Je nach Verzug ist der Durchmesser des blasverformten Schlauches bis zu 50%, bevorzugt bis zu 20%, besonders bevorzugt bis zu 10% größer oder kleiner als unmittelbar beim Verlassen des Ringspalts. Bevorzugt weicht der Durchmesser des blasverformten Schlauches um -10% bis +20%, besonders bevorzugt um -5% bis +20%, vom Durchmesser des Schlauchs unmittelbar beim Verlassen des Ringspalts ab. Wie weiter unten beschrieben, kann eine Querverstreckung auch während des Trocknens durch entsprechende Einstellung des Innendrucks vorgenommen werden. Die erfindungsgemäßen Hüllen sind jedoch stets auf die eine oder andere Weise querverstreckt, da sie nur dann die notwendige Festigkeit und Dehnung haben. Durch entsprechende Wahl von Art und Anteil der Additive lassen sich Schrumpf und Festigkeit der Hülle steuern. Die Querorientierung wird durch die Additive allgemein erleichtert. Ein Verfahren und eine Vorrichtung zum Querverstrecken von nahtlosen Folienschläuchen auf Cellulosebasis, die nach dem NMMO-Verfahren hergestellt sind, sind auch in der gleichzeitig eingereichten Anmeldung DE-A 100 35 798 offenbart.

Schlauchhüllen mit Faserverstärkung (Vlieseinlage) lassen sich im unmittelbaren Düsenbereich wesentlich geringer verstrecken. Die Längsverstreckung erfolgt in diesem Fall zwischen Papierabrollung und unterer Spinnkufenabzugswalze. Eine Querverstreckung ist bei eingelagertem Faserpapier in diesem Bereich nicht möglich, weil ansonsten die Papierüberlappung verrutschen oder sich öffnen würde.

Nach dem Eintreten in das Spinnbad verringert sich der Durchmesser des Schlauches. Die Spinnlösung wirkt dabei von außen wie auch von innen auf den extrudierten Schlauch ein. Durch entsprechende Vorrichtungen im Düsenkörper gelangt die Spinnbadlösung auch in das Innere des Celluloseschlauches. Dadurch verfestigt sich der Schlauch schneller; gleichzeitig wird ein Zusammenkleben der Innenseiten verhindert. Das Spinnbad selbst ist eine wäßrige Lösung, die 5 bis 30 Gew.-%, bevorzugt 10 bis 20 Gew.-%, an NMMO enthält. Es kann auch noch Zusätze enthalten, die die Fällung beeinflussen. Solche Zusätze erschweren jedoch allgemein die Wiederaufarbeitung des NMMOs. Zur Erzielung bestimmter Eigenschaften des Schlauches kann es zweckmäßig sein, ein Innenbad mit einer anderer Zusammensetzung als der des Außenbades zu verwenden. Dementsprechend kann das Innenbad auch eine andere Dichte haben als das Außenbad. Die Temperatur des Spinnbades liegt im Bereich von 0 bis 50 °C, bevorzugt bei 2 bis 20 °C.

Die Tiefe des Spinnbades wird durch das Kaliber des Celluloseschlauches, seine Wandstärke und die gewünschte Verweildauer im Bad (Spinngeschwindigkeit) bestimmt. Allgemein ist die Tiefe so zu wählen, daß beim Flachlegen des Schlauches an der Umlenkwalze die dabei entstehenden Kanten nicht beschädigt werden. Bei einem Schlauch vom Kaliber 20, der unmittelbar nach Verlassen des Ringspalts eine Wandstärke von 0,5 mm besitzt und das Bad mit einer Geschwindigkeit von 20 m pro Minute durchläuft, hat das Spinnbad eine Tiefe von etwa 3 m.

Zur weiteren Verfestigung passiert der flachgelegte Schlauch dann noch mehrere Fäll- und Waschkufen. In den Fällkufen nimmt der Anteil an NMMO ab. Der NMMO-Gehalt wird dabei bestimmt durch die Länge der Fällstrecke, die Spinngeschwindigkeit, das Kaliber des Schlauches und die Menge an zugeführtem Wasser. Es hat sich zudem als günstig erwiesen, die Temperatur von einer Fällkufe zur nächsten zu erhöhen, bis auf etwa 60 bis 70 °C in der letzten Kufe. Das NMMO in dem Schlauch wird dann noch stärker ausgewaschen.

An diese sogenannte Fällstrecke schließen sich mit Wasser gefüllte Waschkufen an, in denen letzte Spuren von NMMO aus dem Schlauch ausgewaschen werden. Die Temperatur dieser Kufen beträgt 15 bis 70 °C, bevorzugt 40 bis 60 °C.

Die aus den Spinn-, Fäll- und Waschbädern anfallenden gebrauchten wäßrigen NMMO-Lösungen lassen sich besonders einfach durch lonenaustauschersäulen reinigen. Das Wasser kann dann im Vakuum abgezogen werden, bis die NMMO-Konzentration wieder 60 Gew.-% erreicht. Diese NMMO-Lösung kann dann erneut zur Herstellung der Spinnlösung verwendet werden. Das NMMO wird so nahezu quantitativ zurückgewonnen.

Üblicherweise folgt dann noch eine sogenannte Weichmacherkufe. Diese enthält eine wäßrige Lösung eines Weichmachers für Cellulose. Geeignete Weichmacher sind Polyole und Polyglykole, insbesondere Glycerin. Die wäßrige Lösung enthält 5 bis 30 Gew.-%, bevorzugt 6 bis 15 Gew.-%, an Weichmacher. Die Temperatur der Weichmacherlösung beträgt vorteilhaft 20 bis 80 °C, bevorzugt 30 bis 70 °C.

Enthält die Hülle bereits die oben beschriebenen strukturverändernden Additive, dann ist eine zusätzlich Weichmachung mit sekundären Weichmachern häufig nicht mehr notwendig. Das ist allgemein dann der Fall, wenn der Anteil der strukturverändernden Additive mehr als 8 Gew.-%, bezogen auf das Gewicht der Cellulose, beträgt.

Danach werden die Schläuche im aufgeblasenen Zustand durch einen Heißlufttrockner geführt. Zweckmäßig wird bei abnehmender Temperatur getrocknet (von etwa 150 °C am Eingang bis etwa 80 °C am Ausgang des Trockners).

Gegebenenfalls kann durch entsprechend erhöhtem Innendruck beim Trocknen eine (gegebenenfalls zusätzliche) Querorientierung erzielt werden. Ansonsten wird der Schlauch beim Trocknen auf das ursprüngliche Kaliber aufgeblasen, um das einmal erreichte Kaliber unverändert zu lassen. Beim Trocknen sinkt der Quellwert auf 130 bis 180 %, vorzugsweise 140 bis 170 %, je nach Trockenbedingungen, Art und Anteil der Additive und Glyceringehalt. Der Schlauch wird dann konditioniert bis der Wassergehalt bei 8 bis 20, bevorzugt 16 bis 18, Gew.-% liegt, jeweils bezogen auf das Gesamtgewicht des Schlauches. Anschließend kann er mit Hilfe eines Quetschwalzenpaares flachgelegt und aufgewickelt werden.

Je nach Kaliber haben die fertigen Schläuche bei einem Glyceringehalt von 20 bis 22 Gew.-% und einem Wassergehalt von 8 bis 10 Gew.-%, jeweils bezogen auf das Gesamtgewicht des Schlauches, ein Gewicht von 30 bis 150 g/m², vorzugsweise 35 und 120 g/m². Das Quadratmetergewicht steigt allgemein mit zunehmendem Kaliber. Der Platzdruck ist ebenfalls abhängig vom Kaliber (kleine Kaliber weisen einen höheren Platzdruck auf). Bei einem Schlauch mit einem Kaliber von 16 bis 30 mm liegt der Platzdruck bei etwa 60 bis 40 kPa, bei einem Kaliber von 30 bis 50 mm bei etwa 40 bis 24 kPa, bei einem Kaliber von 50 bis 140 mm bei etwa 35 bis 15 kPa. Der Platzdruck wird dabei jeweils in nassem Zustand gemessen. Die Dehnung beim Füllen bzw. das Füllkaliber hängt ab vom Aufdehnungsgrad und vom Durchmesser der Spinndüse. Die Dehnung beträgt üblicherweise bis 10 %, kann aber bei speziellen Typen ohne Faserpapiereinlagen bis 100 % und mehr, vorzugsweise etwa + 10 bis + 80 % betragen.

Bei faserverstärkten Hüllen steigen das Flächengewicht der Faserpapiereinlage und das Gewicht der darauf aufgebrachten Cellulose mit zunehmendem Kaliber an. Solche Hüllen haben bei einem Kaliber von 30 mm einen Platzdruck von etwa 200 kPa, bei einem Kaliber von 180 mm etwa 40 kPa.

Die erfindungsgemäße schlauchförmige Hülle kann darüber hinaus, je nach dem vorgesehenen Verwendungszweck der Hülle, auf der Innen- und/oder Außenseite mit einer Imprägnierung oder Beschichtung versehen sein, z. B. einer Flüssigrauchimprägnierung, einer "Easy-peel"-Innenpräparation, einer Haft- oder Trennpräparation. Entsprechendes gilt natürlich auch für Schlauchfolien mit Faserverstärkung und für Flachfolien.

Ein wesentlicher Vorteil der erfindungsgemäßen flächen- oder schlauchförmigen Folien liegt in der gleichmäßigen Struktur und damit gleichmäßigen Dichte, die beim Fällen erzielt wird. Folien, die nach dem Viskoseverfahren hergestellt sind, weisen demgegenüber einen Dichtegradienten auf (hohe Dichte an der Oberfläche, geringe Dichte im Inneren).

Verwendung finden die erfindungsgemäßen schlauchförmigen Folien bevorzugt als Wursthüllen, insbesondere - in der Ausführungsform ohne Faserverstärkung - als "Schäldarm" bei der Herstellung von Frankfurter Würstchen. Sie können daneben auch als Membranen für verschiedene Zwecke, z.B. bei der Blutwäsche, eingesetzt werden. Durch Aufschneiden der Schläuche lassen sich schließlich auch Flachfolien erhalten.

Die folgenden Beispiele dienen der näheren Erläuterung der Erfindung. Prozente sind darin Gewichtsprozente, soweit nicht anders angegeben.

### Beispiel 1 (Vergleichsbeispiel):

4 kg gemahlener Holzzellstoff (Sulfitcellstoff MoDo Dissolving der Firma MoDo) mit einem durchschnittlichen Polymerisationsgrad DP von 600 (bestimmt nach der Cuoxam-Methode) wurde in 51 kg einer 60 %igen NMMO-Lösung angemaischt. Der pH-Wert der Maische wurde dann durch Zugabe von NaOH auf einen Wert von 11 eingestellt. Unter Rühren und Heizen wurde dann im Vakuum bei steigender Temperatur Wasser abdestilliert, bis bei einem NMMO-Gehalt von 87,7 %, bezogen auf das Gesamtgewicht von Wasser und NMMO, das Monohydrat vorlag (erkennbar an einem Brechungsindex von 1,4820). Während dieser etwa 4 Stunden dauernden Phase wurde das Vakuum bei 10 bis 16 Torr gehalten. Nach weiterem 2- bis 3-stündigem Rühren bei etwa 85 bis 95 °C war der Zellstoff vollständig gelöst. Damit weniger Wasser verdampft, wurde das Vakuum während dieser Zeit auf etwa 200 Torr eingestellt. Der Brechungsindex lag dann bei etwa 1,4884.

Die so hergestellte Spinnlösung wurde bei einer Temperatur von 90 °C durch eine Ringspaltdüse mit einem Spaltdurchmesser von 20 mm und einer Spaltbreite von 0,5 mm extrudiert. Mit einer Geschwindigkeit von 20 m/min passierte der Schlauch zunächst eine 10 cm lange Luftstrecke. Darin wurde er durch hydrostatischen Druck querverstreckt. In das Innere des Schlauches wurde eine auf 5 °C abgekühlte 15%ige wäßrige NMMO-Lösung eingebracht, die stetig erneuert wurde und als Innenfällbad wirkte. Anschließend durchlief er eine Fällbadstrecke von 3 m, worin er auf halber Distanz umgelenkt wurde. Zusammensetzung und Temperatur des Spinnbads waren identisch mit der des Innenbades. Der Schlauch war so weit querverstreckt, daß seine Flachbreite nach dem Verlassen der Spinnkufe 30 mm betrug. Die Kanten zeigten keine Beschädigung.

Der Schlauch passierte dann 4 Fällkufen mit je 8 Umlenkwalzen oben und unten, einer Badtiefe von 1 m und einer Luftstrecke von 2 m. Am Ende der letzten Kufe wurde Wasser eingeleitet, das im Gegenstrom geführt wurde. Am Ausgang der ersten Kufe wurde der NMMO-Gehalt auf diese Weise bei 12 bis 15 % gehalten. Die Temperatur stieg bis auf 60 bis 70 °C in der letzten Kufe. Nach Durchlaufen dieser Fällstrecke wurden dann in 4 Waschkufen Reste von NMMO aus dem Schlauch herausgewaschen. Die Temperatur in diesen Kufen lag ebenfalls bei 60 bis 70 °C. Zum Schluß wurde der Schlauch durch eine Weichmacherkufe geführt, die eine 10 %ige Glycerinlösung mit einer Temperatur von 60 °C enthielt. Die Flachbreite betrug beim Verlassen der Glycerinkufe noch 20 mm. Zwischen 2 Quetschwalzenpaaren wurde der Schlauch dann mit Heißluft getrocknet. Der Trockner wies mehrere Zonen mit abnehmender Temperatur auf. Die Zone am Eingang hatte eine Temperatur von 120°C, die am Ausgang von 80 °C. Danach wurde der Schlauch angefeuchtet, bis sein Wassergehalt bei 8 bis 12 % lag (bezogen auf das Gewicht der Cellulose), und aufgewickelt. Der Platzdruck dieses Schlauches betrug 52 kPa, sein Quellwert 130 %, seine Flachbreite 30 mm. Er wurde dann auf 16 bis 18 % angefeuchtet und zu Raupen gerafft.

Bei einer der so hergestellten Hüllen wurde während des Raffens eine Easy-peel-Imprägnierung auf die innere Oberfläche aufgesprüht.

Die Raupen wurden auf einer automatischen Füllmaschine (®FrankAMatic) mit Würstchenbrät gefüllt, gebrüht und geräuchert. Danach wurde die Hülle mit einer automatisch arbeitenden Vorrichtung abgeschält. Die Hülle ohne zusätzliche Innenimprägnierung ließ sich nicht einwandfrei abschälen. Beim Verlassen der Schälvorrichtung hafteten noch Teile aus der Wurstoberfläche an der Hülle. Bei der Hülle mit Easy-peel-lmprägnierung trat dieses Problem nicht mehr auf; das Schälverhalten war gut.

### Beispiel 2:

Eine gemäß Beispiel 1 hergestellte Spinnlösung mit einem Cellulosegehalt von 9 %, bezogen auf das Gesamtgewicht der Lösung, die jedoch im Unterschied zu Beispiel 1 mit 10 % Glycerin-monolaurat (GML) und 0,5 % Carboxymethylcellulose (CMC), bezogen auf das Gesamtgewicht der Feststoffe in der Spinnlösung, versetzt war, wurde wie beschrieben versponnen. Die Oberflächenspannung der damit hergestellten Hülle war deutlich reduziert (s. nachfolgende Tabelle). Die Hülle ohne Easy-peel-Präparation ließ sich problemlos mit einer automatischen Schälmaschine vom Würstchenbrät abschälen.

### Beispiel 3:

Beispiel 2 wurde wiederholt mit der Abweichung, daß anstelle von GML und CMC nunmehr Gelatine und Stärke als Additive verwendet wurden. Der Gewichtsanteil der Gelatine betrug wiederum 10 %, der der Stärke 1 %, jeweils bezogen auf das Gesamtgewicht der Feststoffe. Mit der so abgeänderten Spinnlösung wurde eine Hülle vom Kaliber 40 mm hergestellt. Diese Hülle zeigte bei Salamibrät eine gute Haftung und Schälbarkeit.

### Beispiel 4:

Beispiel 2 wurde wiederholt mit der Abweichung, daß anstelle von GML und CMC nunmehr GML und Carboxymethylstärke (CMS) als Additive verwendet wurden. Der Gewichtsanteil von GML und CMS betrug jeweils 5 %, bezogen auf das Gesamtgewicht der Feststoffe. Die mit der so abgeänderten Spinnlösung hergestellte Hülle zeigte eine verminderte Oberflächenspannung und eine erhöhte Permeation, wodurch sie für Rauch besser durchlässig war. Das Schälverhalten war gut, auch ohne Easy-peel-Präparation.

### Beispiel 5:

Beispiel 2 wurde wiederholt mit der Abweichung, daß anstelle von GML und CMC nunmehr Natriumcaseinat und Johannisbrotkernmehl als Additive verwendet wurden. Der Gewichtsanteil von Natriumcaseinat und Johannnisbrotkernmehl betrug jeweils 5 %, bezogen auf das Gesamtgewicht der Feststoffe. Die mit der so abgeänderten Spinnlösung hergestellte Hülle zeigte eine verringerte Oberflächenrauhigkeit und eine erhöhte Permeation, wodurch sie für Rauch besser durchlässig war. Die Bräthaftung war gegenüber einer reinen Cellulosehülle verbessert. Diese Hülle war daher auch sehr gut für Dauerwurst einsetzbar.

### Beispiel 6:

Beispiel 2 wurde wiederholt mit der Abweichung, daß anstelle von GML und CMC nunmehr Gelatine und Natriumcaseinat als Additive verwendet wurden. Der Gewichtsanteil von Gelatine und Natriumcaseinat betrug jeweils 5 %, bezogen auf das Gesamtgewicht der Feststoffe. Mit der so veränderten Spinnlösung wurde eine schlauchförmige Hülle erhalten, bei der Oberflächenspannung, Rauhigkeit und Permeation vermindert waren. Dies führte zu einer sehr guten Bräthaftung und sehr guten Reifeeigenschaften. Die Hülle war daher für Dauerwurst sehr gut geeignet.

### Beispiel 7:

Beispiel 2 wurde wiederholt mit der Abweichung, daß anstelle von GML und CMC nunmehr Gelatine, Carboxymethylstärke und Natriumcaseinat als Additive verwendet wurden. Der Gewichtsanteil von Gelatine, CMS und Natriumcaseinat betrug jeweils 3,33 %, bezogen auf das Gesamtgewicht der Feststoffe. Mit der so abgeänderten Spinnlösung wurde eine Hülle erhalten, deren Oberflächenspannung und Rauhigkeit vermindert waren. Die Permeation war erhöht. Dies führte zu einer verbesserten Rauchdurchlässigkeit und zu einer besseren Schälbarkeit bei geräucherten Brühwürsten.

In der folgenden Tabelle sind die Eigenschaften der gemäß den Beispielen 1 bis 7 hergestellten Hüllen zusammengefaßt.

**Tabelle 1**

| Feststoff in der Spinnlösung | | Viskosität ηₒ | Oberflächenspannung | Rauhigkeit | Permeation |
|---|---|---|---|---|---|
| Art | Anteil | [Pa·s] | [mN/m] | [nm] | [l/m²·d] bei 40 bar |
| Cellulose | 10,0 % | 2.500 =100% | 48 =100% | 6,35 = 100% | 150 =100% |
| Cellulose | 8,95% | 50% | 70 % | 250% | 80% |
| GML | 1,00% | | | | |
| CMC | 0,05% | | | | |
| Cellulose | 8,90% | 60 % | 85 % | 90 % | 70% |
| Gelatine | 1,00 % | | | | |
| Stärke | 0,10% | | | | |
| Cellulose | 9 % | 75 % | 80 % | 75 % | 120% |
| GML | 0,5% | | | | |
| CMS | 0,5% | | | | |
| Cellulose | 9 % | 150% | 100% | 80% | 150% |
| Na-caseinat | 0,5 % | | | | |
| Johannisbrotkernmehl | 0,5 % | | | | |
| Cellulose | 9 % | 60% | 85% | 70% | 80% |
| Gelatine | 0,5 % | | | | |
| Na-caseinat | 0,5 % | | | | |
| Cellulose | 9 % | 70 % | 90 % | 85% | 130% |
| CMS | 0,33% | | | | |
| Gelatine | 0,33 % | | | | |
| Na-caseinat | 0,33 % | | | | |

Neben den in den in den Beispielen 1 bis 7 beschriebenen Schlauchfolien wurden auch Flachfolien in Handstrichverfahren hergestellt. Dazu wurden Cellulose/NMMO-Hydrat-Lösungen mit verschiedenen Additiven versetzt. Die Lösungen wurden dann mit einem Handrakel in Form einer dünnen Schicht auf eine auf etwa 90 bis 100 °C vorgeheizte Glasplatte aufgebracht. Anschließend wurde die Glasplatte mit der aufgebrachten Schicht in ein etwa 15%iges wäßriges NMMO-Fällbad eingetaucht. Die von der Unterlage abgelöste Folie wurde sodann mehrfach gewaschen bis sie praktisch frei von NMMO-Resten war und in eine etwa 5 %ige wäßrige Glycerinlösung getaucht. Auf einem Spannrahmen wurde die Flachfolie dann getrocknet bis sie eine Restfeuchte von 8 bis 10 % hatte. Zu Vergleichszwecken wurde eine Folie ohne Zusatz von Additiven hergestellt. In der folgenden Tabelle 2 sind die Zusammensetzungen der einzelnen Lösungen, deren Viskosität und die Oberflächeneigenschaften (Rauhigkeit und Oberflächenspannung auf der äußeren, d.h. der ursprünglich von der Unterlage abgewandten Seite) der damit hergestellten Folien zusammengestellt.

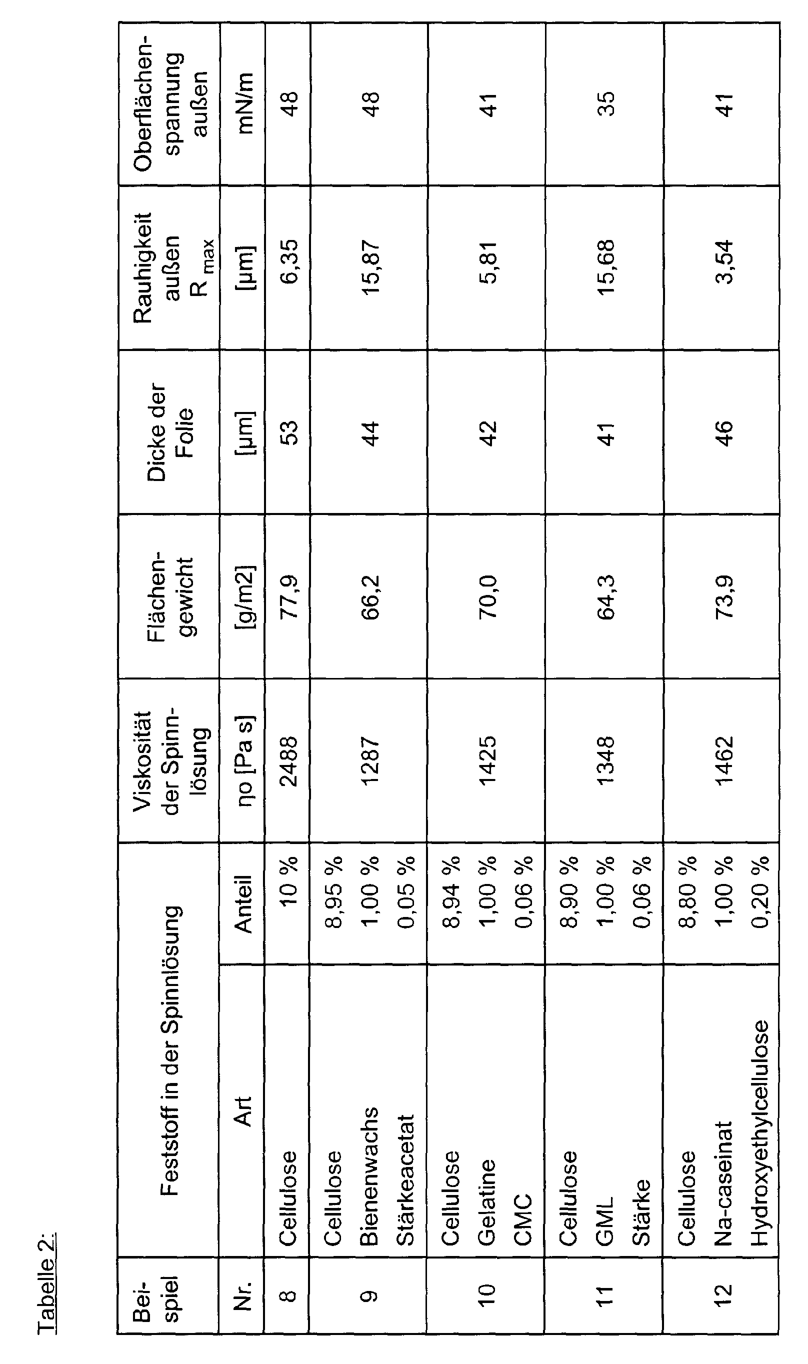

Die Tabelle zeigt, daß die Oberflächeneigenschaften durch die Additive in starkem Maße beeinflußt werden. Je nach Art des Additivs nehmen Rauhigkeit und Oberflächenspannung zu oder ab. Damit kann die Hülle an das jeweilige Füllgut in optimaler Weise angepaßt werden, insbesondere lassen sich dadurch Haftung und Schälbarkeit einstellen.

Neben den Schlauch- und Flachfolien ohne Faserverstärkung wurden auch Schlauchfolien mit Faservlies-Einlage hergestellt. Dazu wurden die folgenden Spinnlösungen verwendet:
a) Spinnlösung mit Zusatz von 10 % Gelatine und 2 % CMC, jeweils bezogen auf das Gewicht der Cellulose
   In 51 kg einer 60 %igen wäßrigen NMMO-Lösung, die durch Zugabe von NaOH auf einen pH-Wert von 11 eingestellt war, wurden 250 g handelsübliche Gelatine eingerührt. Zu der dabei entstandenen Suspension wurden dann 2,5 kg gemahlener Holzzellstoff (Sulfitzellstoff MoDo Dis-solving mit einem Cuoxam-DP von 550 der Firma MoDo) und 50 g Carboxymethylcellulose (CMC C30 der Clariant GmbH) gegeben. Unter Heizen und Rühren wurde dann bei vermindertem Druck (25 mbar) mit steigender Temperatur Wasser abdestilliert, bis der Anteil an NMMO im Lösemittel bei 87 % lag (entspricht NMMO-Monohydrat). Anschließend wurde 2 Stunden lang bei einer Temperatur von 90 °C und einem Druck von 200 mbar weiter gerührt. Der Zellstoff war dann vollständig gelöst. Die Lösung hatte einen Brechungsindex von 1,4805, ihre Nullscherviskosität bei 85 °C betrug 92 Pa·s.
b) Spinnlösung mit Zusatz von 10 % GML und 1,5 % Stärke, jeweils bezogen auf das Gewicht der Cellulose
   In 40 kg einer 76 %igen wäßrigen NMMO-Lösung wurden 580 g GML-Paste (Trockengehalt 42 %) bei einer Temperatur von 60 °C eingerührt, worauf das GML schmolz. Anschließend wurden 2,5 kg gemahlener Holzzellstoff (Sulfitzellstoff MoDo Dissolving, wie unter a)) und 37,5 g Stärke zugegeben. Unter Heizen und Rühren wurde dann bei vermindertem Druck (25 mbar) mit steigender Temperatur Wasser abdestilliert, bis der Anteil an NMMO im Lösemittel bei 87 % lag. Anschließend wurde 2 Stunden lang bei einer Temperatur von 90 °C und einem Druck von 200 mbar weiter gerührt. Der Zellstoff war dann vollständig gelöst. Die Lösung hatte einen Brechungsindex von 1,4820, ihre Nullscherviskosität bei 85 °C betrug 83 Pa·s.

### Beispiel 13 (faserverstärkte Hülle):

Wie in der DE-A 198 43 723 beschrieben, wurde ein Faservlies mit einem Gewicht von 17 g/m² zu einem Schlauch vom Kaliber 40 geformt und mit der unter a) beschriebenen Spinnlösung, die Cellulose und Gelatine enthielt, außenbeschichtet. Die weiteren Herstellungsschritte entsprachen den im Beispiel 1 genannten.

Die so hergestellte Hülle zeigte eine reduzierte Oberflächenspannung. Der Platzdruck der Hülle (im nassen Zustand) lag bei 105 kPa. Die statische Dehnung betrug im gewässerten Zustand 44,5 mm bei einem Innendruck von 42 kPa. Die Gelatine bewirkte eine gute Bräthaftung, auch ohne zusätzliche Innenpräparation. Beim Reifen schrumpfte die Hülle mit dem Brät mit und ließ sich gut abschälen.

### Beispiel 14 (faserverstärkte Hülle):

Beispiel 13 wurde wiederholt mit der Abweichung, daß das zu einem Schlauch vom Kaliber 40 geformte Faservlies mit der unter b) beschriebenen Spinnlösung, die Cellulose und GML enthielt, beschichtet wurde. Der Platzdruck der Hülle (im nassen Zustand) lag bei 102 kPa. Die statische Dehnung betrug im gewässerten Zustand 44,2 mm bei einem Innendruck von 42 kPa, die Oberflächenspannung betrug 38 dyn/cm. Die Hülle ließ sich nach dem Brühen, Füllen und Räuchern von Fleischwurstbrät leicht abschälen.

## Patentansprüche

1. Nahrungsmittelhülle auf Cellulosebasis, hergestellt mit einer Spinnlösung, die Cellulose, N-Methyl-morpholin-N-oxid, Wasser und Additive umfaßt, **dadurch gekennzeichnet, daß** die Spinnlösung mindestens ein Additiv enthält, das die Oberflächeneigenschaften der Hülle verändert, und mindestens ein anderes Additiv, das ihre innere Struktur verändert.

2. Nahrungsmittelhülle gemäß Anspruch 1, **dadurch gekennzeichnet, daß** das oberflächenverändernde Additiv ein Protein, ein Proteinderivat, ein Derivat eines Mono-, Di- oder Oligosaccharids, ein Mono-, Di- und Triglycerid, ein Diketen mit langkettigen Alkylresten, ein Wachs oder ein Paraffin ist.

3. Nahrungsmittelhülle gemäß Anspruch 2, **dadurch gekennzeichnet, daß** der Anteil des mindestens einen oberflächenverändernden Additivs 0,2 bis 50,0 Gew.-%, bevorzugt 0,3 bis 15,0 Gew.-%, beträgt, jeweils bezogen auf das Gewicht der Cellulose.

4. Nahrungsmittelhülle gemäß einem oder mehreren der Ansprüche 1 bis 3, **dadurch gekennzeichnet, daß** das zur Veränderungen der inneren Struktur dienende Additiv Stärke, ein Stärkederivat, Cellulose, ein Cellulosederivat, ein Polysaccharid, Alginsäure, ein Alginat, Chitosan, Polyvinylalkohol, ein Polyvinylacetat, ein Polyacrylat, Polyvinylpyrrolidon, ein Polyamid oder ein Polyester, ein Copolymer mit Einheiten aus Vinylpyrrolidon, ein Methylvinylether/Maleinsäureanhydrid-Copolymer, eine Fettsäure, ein Fettsäuresalz ist.

5. Nahrungsmittelhülle gemäß einem oder mehreren der Ansprüche 1 bis 4, **dadurch gekennzeichnet, daß** der Anteil des mindestens einen zur Veränderung der inneren Struktur dienenden Additivs 0,1 bis 50 Gew.-%, bevorzugt 0,5 bis 25 Gew.-%, besonders bevorzugt 1 bis 15 Gew.-%, beträgt, jeweils bezogen auf das Gewicht der Cellulose.

6. Nahrungsmittelhülle gemäß einem oder mehreren der Ansprüche 1 bis 5, **dadurch gekennzeichnet, daß** sie schlauchförmig ist.

7. Nahrungsmittelhülle gemäß einem oder mehreren der Ansprüche 1 bis 6, **dadurch gekennzeichnet, daß** sie eine Vlieseinlage, bevorzugt ein Faservlies, enthält.

8. Nahrungsmittelhülle gemäß einem oder mehreren der Ansprüche 1 bis 7, **dadurch gekennzeichnet, daß** die Spinnlösung 5 bis 15 Gew.-%, bevorzugt 6 bis 12 Gew.-%, besonders bevorzugt 7 bis 10 Gew.-%, Cellulose, enthält, jeweils bezogen auf ihr Gesamtgewicht.

9. Nahrungsmittelhülle gemäß einem oder mehreren der Ansprüche 1 bis 8, **dadurch gekennzeichnet, daß** die Cellulose einen durchschnittlichen Polymerisationsgrad DP von 300 bis 700, bevorzugt 400 bis 650, aufweist.

10. Nahrungsmittelhülle gemäß einem oder mehreren der Ansprüche 1 bis 9, **dadurch gekennzeichnet, daß** die Spinnlösung 90,5 bis 92,5 Gew.-% NMMO und 9,5 bis 7,5 Gew.-% Wasser, bezogen auf das Gesamtgewicht der Lösemittel, enthält.

11. Nahrungsmittelhülle gemäß einem oder mehreren der Ansprüche 1 bis 10, **dadurch gekennzeichnet, daß** die Spinnlösung bei einer Temperatur von 85 bis 105 °C, bevorzugt 90 bis 95 °C, durch eine Ringspaltdüse mit einer Spaltbreite von 0,1 bis 2,0 mm, bevorzugt 0,2 bis 1,0 mm, extrudiert wird.

12. Nahrungsmittelhülle gemäß einem oder mehreren der Ansprüche 1 bis 11, **dadurch gekennzeichnet, daß** die Luftstrecke zwischen Ringspalt und Oberfläche des Spinnbads 1 bis 50 cm, bevorzugt 2,5 bis 20 cm, beträgt.

13. Verwendung der Nahrungsmittelhülle gemäß einem oder mehreren der Ansprüche 1 bis 12 als Wursthülle.
